# EUROPÄISCHE PATENTSCHRIFT

(11) **EP 3 895 531 B1**
(45) Veröffentlichungstag und Bekanntmachung des Hinweises auf die Patenterteilung: **04.10.2023**
(21) Anmeldenummer: 21157526.1
(22) Anmeldetag: 17.02.2021
(51) Int. Cl.: A01M 7/00, A01M 9/00, A01B 79/00

(54) **LANDWIRTSCHAFTLICHES VERTEILSYSTEM, VERFAHREN ZUR ANPASSUNG EINER AUSBRINGMENGE SOWIE LANDWIRTSCHAFTLICHE VERTEILMASCHINE**
AGRICULTURAL DISTRIBUTION SYSTEM, METHOD FOR ADAPTING A DISPENSING QUANTITY AND AGRICULTURAL DISTRIBUTOR
SYSTÈME D'ÉPANDAGE AGRICOLE, PROCÉDÉ D'AJUSTEMENT D'UNE QUANTITÉ D'APPLICATION, AINSI QUE MACHINE D'ÉPANDAGE AGRICOLE

(30) Priorität: 15.04.2020 DE 102020110282
(43) Veröffentlichungstag der Anmeldung: 20.10.2021
(73) Patentinhaber: HORSCH LEEB Application Systems GmbH, 94405 Landau an der Isar (DE)
(72) Erfinder: Leeb, Theodor, 94405 Landau an der Isar (DE); Stangl, Josef, 92421 Schwandorf (DE)
(74) Vertreter: v. Bezold & Partner Patentanwälte - PartG mbB

(56) Entgegenhaltungen:
- EP-A1- 3 287 007
- WO-A1-99/17606
- WO-A1-2020/169817
- DE-A1- 19 858 168
- DE-A1-102014 226 189
- US-A1- 2010 032 492

## Beschreibung

Die Erfindung betrifft ein landwirtschaftliches Verteilsystem, zum Verteilen flüssiger und/oder fester landwirtschaftlicher Verteilgüter auf einem Pflanzenbestand, vorzugsweise für eine Feldspritze oder einen Düngerstreuer. Die Erfindung betrifft zudem ein Verfahren zur Anpassung einer Ausbringmenge. Darüber hinaus betrifft die Erfindung eine landwirtschaftliche Verteilmaschine.

Aus dem Stand der Technik ist es bekannt, dass zur gleichmäßigen Verteilung flüssiger und/oder fester landwirtschaftlicher Verteilgüter landwirtschaftliche Verteilsysteme, respektive landwirtschaftliche Verteilmaschinen, vorzugsweise Feldspritzen und/oder Düngerstreuer eingesetzt werden. Eine Ausführungsvariante einer derartigen Verteilmaschine ist aus dem Stand der Technik durch die EP 3 332 639 A1 bereits bekannt. Derartige Feldspritzen und/oder Düngerstreuer weisen zur Erreichung einer möglichst großen Schlagkraft, ein sich in großer Breite quer zur Fahrrichtung erstreckendes Verteilgestänge (z.B. Spritzgestänge) auf. Wobei am Verteilgestänge zur Verteilung landwirtschaftlicher Verteilgüter, wie bspw. Spritzmittel jeweils, mit einem Vorratstank verbundene, Verteilelemente wie bspw. Spritzdüsen, Prallelemente oder dergl. angebracht sind.

Bislang ist es üblich, eine konstante Menge an Verteilgütern mittels der Verteilmaschine auf einer Ackerfläche auszubringen. Wobei die konstante Menge bspw. durch eine Vorabdefinition der Begleitvegetation durchgeführt wird. Wobei bislang in der Regel gilt, je mehr Begleitvegetation desto größer die Menge an zu verteilenden Verteilgüter. Insbesondere wurde bislang in der Regel eine derartige Menge an Verteilgütern, vorzugsweise Spritzmittel ausgebracht, dass damit die gesamte Begleitvegetation vernichtet wurde, d.h. es wurde immer eine maximale Menge an Verteilgut ausgebracht, um sicher zu stellen das jegliche Begleitvegetation behandelt wurde. Dies führte jedoch zum Verlust von Biodiversität, insbesondere wurde somit auch Begleitvegetation beschädigt, welche das Wachstum der Nutzpflanze bzw. Kulturpflanze mitunter nicht beeinträchtigte.

Die somit jeweils ausgebrachte maximale Menge an Verteilgut konnte zudem auch Resistenzen hervorrufen.

Zum gezielten Ausbringen von Verteilgütern, ist es zudem bereits bekannt, mittels Kamerasystemen Begleitvegetation zu detektieren und Anhand der Begleitvegetation gezielt Verteilelemente zu steuern. Jedoch sehen derartige Systeme in der Regel vor, dass Verteilelemente jeweils gänzlich ein- und ausgeschaltet werden, wodurch jedoch auch wiederum derartige Systeme träge sind und oftmals eine exakte Behandlung von Begleitvegetation nicht möglich ist.

Dokument DE 198 58 168 A1 offenbart eine Vorrichtung zur Ermittlung des Pflanzenbewuchses eines Feldabschnittes mit einer einen Lichtstrahl aussendenden Lichtquelle, mit einem eine optische Achse aufweisenden Bildaufnehmer und mit einer elektronischen Auswerteeinheit. Der Bildaufnehmer ist derart auf den Ackerboden ausgerichtet, dass der Bildaufnehmer einen vorbestimmten Feldabschnitt optisch erfasst und dass die Lichtquelle derart angeordnet ist, dass der Lichtstrahl innerhalb dieses Feldabschnittes auf den Ackerboden auftrifft, sofern kein Pflanzenbewuchs vorliegt.

Dokument WO 2020/169817 A1 offenbart eine landwirtschaftliche Vorrichtung zum Ausgeben eines flüssigen Produkts, das über ein landwirtschaftliches Feld gesprüht werden soll. Die landwirtschaftliche Vorrichtung umfasst u. a. ein Ortungssystem zur Bereitstellung von Positionsdaten, die eine Echtzeitposition der Vorrichtung und einen Zeitstempel umfassen, ein Detektionssystem, das an einem Ausleger und/oder vor einem landwirtschaftlichen Gerät positioniert ist und dazu konfiguriert ist, Detektionsdaten mit Informationen über die zu besprühende Oberfläche bereitzustellen, und einen Kartengenerator zur Erzeugung einer rasterbasierten Darstellung der Oberfläche basierend auf den Detektionsdaten und Positionsdaten.

Dokument US 2010/032492 A1 offenbart ein System zum Ausbringen von flüssigen, landwirtschaftlichen Produkten auf ein Feld mittels individuell gesteuerter, pulsweitenmodulierter Ventile, wobei eine Steuerung die Rate, mit der ein flüssiges, landwirtschaftliches Produkt von jedem Ventil abgegeben wird, basierend auf einem berechneten Durchflussfaktor für jedes Ventil steuert.

Dokument EP 3 287 007 A1 offenbart ein Verfahren zur Bekämpfung von Schadorganismen, die beim Anbau von Kulturpflanzen auftreten können. Die Bekämpfung erfolgt auf der Basis der Vorhersage von teilflächenspezifischen Befallsrisiken.

Dokument WO 99/17606 A1 offenbart ein Verfahren zur Behandlung von Pflanzenwuchs, z.B. auf Feldern, die es ermöglicht, eine Behandlungsstrategie für Vegetation mittels einer CCD-Kamera und einer Bildanalyse in einer Recheneinheit zu bestimmen, wobei die Behandlungsstrategie aus einem Besprühen mit Pestiziden oder einem Ausbringen von Düngemitteln besteht. Die Bildverarbeitung erfolgt dadurch, dass die Kamera in Teilbereichen eine elektromagnetische Strahlung auf Pixelebene misst, die in der Recheneinheit unter Einteilung der Spektralbereiche in mehrere Klassen verarbeitet wird. Auf der Grundlage der Klasseneinteilung kann eine Verteilungsfunktion für die Vegetationsmenge berechnet und eine Behandlungsstrategie bestimmt werden.

Aufgabe der Erfindung ist es somit, die zielgenaue Verteilung landwirtschaftlicher Verteilgüter weiter zu verbessern.

Diese Aufgabe wird gelöst durch ein landwirtschaftliches Verteilsystem zum Verteilen flüssiger und/oder fester landwirtschaftlicher Verteilgüter, mit den Merkmalen des unabhängigen Anspruch 1, durch ein Verfahren zur Anpassung der Ausbringmenge mit den Merkmalen des Verfahrensanspruch 15, sowie durch eine landwirtschaftliche Verteilmaschine mit den Merkmalen des Anspruch 16.

Vorteilhafte Ausführungsformen und Weiterbildungen der Erfindung sind in den abhängigen Ansprüchen und der folgenden Beschreibung unter teilweiser Bezugnahme auf die Figuren offenbart.

Die Erfindung betrifft ein landwirtschaftliches Verteilsystem, zum Verteilen flüssiger und/oder fester landwirtschaftlicher Verteilgüter auf einem Pflanzenbestand, vorzugsweise für eine Feldspritze oder einen Düngerstreuer (z.B. pneumatischer Düngerstreuer).

Das Verteilsystem umfasst ein Verteilgestänge (z.B. Spritzgestänge) mit einer Mehrzahl von an diesem angeordneten, mit einem Vorratsbehälter für mindestens ein landwirtschaftliches Verteilgut verbundenen und/oder verbindbaren (z.B. fluidisch verbundenen) Verteilelementen (z.B. Spritzdüsen, Prallelementen oder dergl.).

Das Verteilsystem umfasst zudem eine Erfassungseinrichtung, welche dazu eingerichtet ist, Entwicklungsstadien des Pflanzenbestand zu detektieren.

Zudem umfasst das Verteilsystem, respektive die landwirtschaftliche Verteilmaschine eine Datenverarbeitungseinrichtung.

Um eine zielgenaue Verteilung landwirtschaftlicher Verteilgüter weiter zu verbessern ist erfindungsgemäß vorgesehen, dass die Datenverarbeitungseinrichtung dazu eingerichtet ist, eine Ausbringmenge landwirtschaftlicher Verteilgüter einzelner, gruppierter oder sämtlicher Verteilelemente an Entwicklungsstadien anzupassen.

Insbesondere umfasst die Datenverarbeitungseinrichtung ein entsprechendes Steuerungs- und/oder Regelungsprogramm, welches dazu eingerichtet ist, eine Ausbringmenge landwirtschaftlicher Verteilgüter einzelner, gruppierter oder sämtlicher Verteilelemente an Entwicklungsstadien anzupassen.

Die Erfindung macht sich die Erkenntnis zu nutzen, dass es für eine zielgenaue Bekämpfung von Begleitvegetation nicht entscheidend ist, wie viel Begleitvegetation vorhanden ist, sondern wie groß diese ist, d.h. in welchem Entwicklungsstadium sich diese befindet, da eine zielgenaue Bekämpfung eine kritische Menge an Verteilgut (z.B. Spritzmittel) benötigt, welche wiederum abhängig ist vom Entwicklungsstadium.

Dies kann zudem auch bei Düngemaßnahmen von Bedeutung sein, da wiederum eine Menge eines zu verteilenden Düngers nicht alleine abhängig ist von der Menge an Nutzpflanzen sondern auch jeweils von deren Entwicklungsstadium.

In Folge der Erfindungsgemäßen Maßnahmen, wird demnach ein Verteilsystem geschaffen, bei welchem eine Ausbringmenge einzelner, gruppierter oder sämtlicher Verteilelemente Anhand von mittels einer Erfassungseinrichtung detektierten Entwicklungsstadium mittels einer Datenverarbeitungseinrichtung angepasst wird und nicht mehr wie aus dem Stand der Technik bekannt an eine maximale Menge an Begleitvegetation angepasst wird. Insbesondere wird somit ein Verteilsystem geschaffen mit welchem auch die Gefahr von Resistenzen weitgehend minimiert werden kann.

Im Kontext der Erfindung umfasst die Definition Entwicklungsstadium auch das Wachstumsstadium, insbesondere umfasst ist ein Detektieren des Pflanzenbestand ob dieser groß oder klein ist, vorzugsweise ob dieser einer Mindestgröße (z.B. minimale Größe) aufweist oder nicht. Auch kann ein Detektieren ein Ermitteln umfassen, bspw. ein Ermitteln in welchem Blattstadium sich der Pflanzenbestand befindet umfassen. Auch kann ein detektieren eine Zuordnung und/oder Erfassung eines Pflanzenbestand an einen BBCH-Code umfassen. Zudem kann ein Detektieren auch ein Erfassen von Pflanzensorten des Pflanzenbestand umfassen, bspw. auch ein Erfassen von Arten der Begleitvegetationssorten.

Um eine zielgenaue Verteilung landwirtschaftlicher Verteilgüter noch weiter zu verbessern ist gemäß einer alternativen Ausführungsvariante vorgesehen, dass die Datenverarbeitungseinrichtung dazu eingerichtet ist, die Ausbringmenge an einzelnen, gruppierten oder sämtlichen Verteilelementen unabhängig voneinander an Entwicklungsstadien anzupassen. Somit ist es möglich, die Ausbringmenge gezielt nur an Positionen (z.B. Bereichen) von Verteilelementen (und somit in Bereichen eines Pflanzenbestand) anzupassen in denen dies auch erforderlich ist.

In einer weiteren Ausführungsvariante ist die Datenverarbeitungseinrichtung dazu eingerichtet, die Anpassung der Ausbringmenge an einzelnen, gruppierten oder sämtlichen Verteilelementen durch eine Pulsweitenmodulation umzusetzen. Wobei zudem vorgesehen sein kann, dass einzelne, gruppierte oder sämtliche Verteilelemente mit entsprechenden Ventilen ansteuerbar sind und wobei die Ventile mit der Datenverarbeitungseinrichtung mit einer erforderlichen Pulsweitenmodulation angesteuert werden können.

In einer weiteren Ausführungsvariante der Erfindung kann vorgesehen sein, dass eine Anpassung der Ausbringmenge an einzelnen, gruppierten oder sämtlichen Verteilelementen durch veränderte (z.B. steuerbare) Querschnitte von die Verteilelemente mit dem Vorratstank verbindenden Leitungen erfolgt. Auch denkbar wäre eine Anpassung der Ausbringmenge an einzelnen, gruppierten oder sämtlichen Verteilelementen durch veränderte (z.B. steuerbare) Drücke in den die Verteilelemente mit dem Vorratstank verbindenden Leitungen. Auch andere Systeme zu Anpassung der Ausbringmenge wären denkbar.

Erfindungsgemäß weist der Pflanzenbestand Nutzpflanzen (z.B. landwirtschaftlich angebaute Pflanzen wie bspw. Getreide) und Begleitvegetation (z.B. insbesondere Begleitpflanzensorten wie bspw. Unkraut, Beikraut, Kulturpflanzenbegleiter, Nutzpflanzenbegleiter oder dergl.) auf, wobei es zudem möglich ist, dass die Erfassungseinrichtung dazu eingerichtet ist, Entwicklungsstadien von Nutzpflanzen und/oder Begleitvegetation zu detektieren, insbesondere eine Größe (z.B. auf Basis des Blattwachstums) von Nutzpflanzen und/oder Begleitvegetation zu detektieren.

Zur Erreichung einer möglichst genauen Verteilung einer kritischen Menge an Verteilgut für die Begleitvegetation, kann gemäß einer weiteren Ausführungsvariante vorgesehen sein, dass die Erfassungseinrichtung dazu eingerichtet ist, Entwicklungsstadien von Begleitvegetation zu detektieren, vorzugsweise eine Größe von Begleitvegetation zu detektieren, und dass die Datenverarbeitungseinrichtung dazu eingerichtet ist, eine Ausbringmenge landwirtschaftlicher Verteilgüter einzelner, gruppierter oder sämtlicher Verteilelemente an eine Größe, vorzugsweise der Begleitvegetation, anzupassen. So kann vorzugsweise vorgesehen sein, dass die Erfassungseinrichtung ausgebildet ist, eine minimale Größe der Begleitvegetation zu detektieren, wobei insofern die Begleitvegetation eine minimale Größe überschreitet eine Ausbringmenge entsprechend mittels der Datenverarbeitungseinrichtung angepasst wird. Somit kann insbesondere erreicht werden, dass nur an derartiger Begleitvegetation Verteilgut ausgebracht wird, an welcher dies auch erforderlich ist.

Es ist alternativ oder ergänzend möglich, dass die Erfassungseinrichtung dazu eingerichtet ist, dass mittels dieser verschiedene minimale Größen für Begleitvegetation auf einer Ackerfläche (z.B. eines Pflanzenbestand) definiert werden können, wodurch erreicht werden kann, dass eine noch gezieltere Anpassung der Ausbringmenge erfolgt. Somit kann erreicht werden, dass für verschiedene Arten von Begleitpflanzensorten von Begleitvegetation verschiedene minimale Größe definiert werden können um somit verschiedene Arten von Begleitpflanzensorten auch unterschiedlich mit Verteilgut behandeln zu können.

Es ist möglich, dass der Pflanzenbestand unterschiedliche Begleitpflanzensorten (z.B. unterschiedliche Arten von Unkraut, Beikraut, Kulturpflanzenbegleiter, Nutzpflanzenbegleiter oder dergl.) aufweisende Begleitvegetation aufweist, und dass die Erfassungseinrichtung dazu eingerichtet ist, Entwicklungsstadien von Nutzpflanzen und/oder von Begleitpflanzensorten zu detektieren, insbesondere eine Größe und/oder Arten von Begleitpflanzensorten zu detektieren. Wobei die Datenverarbeitungseinrichtung dazu eingerichtet ist, eine Ausbringmenge landwirtschaftlicher Verteilgüter einzelner, gruppierter oder sämtlicher Verteilelemente an Begleitpflanzensorten anzupassen, insbesondere an eine Größe und/oder eine Art von Begleitpflanzensorten anzupassen. Somit kann erreicht werden, dass nur Verteilgut an den Begleitpflanzensorten ausgebracht wird, für welche das Verteilgut auch geeignet ist, d.h. eingesetzt werden kann.

Zur Erreichung einer möglichst genauen Verteilung einer kritischen Menge an Verteilgut für die Begleitvegetation, kann gemäß einer weiteren Ausführungsvariante vorgesehen sein, dass die Erfassungseinrichtung und/oder die Datenverarbeitungseinrichtung dazu eingerichtet ist, einen Mengenanteil der Begleitvegetation gegenüber den Nutzpflanzen zu detektieren und/oder zu definieren und dass die Datenverarbeitungseinrichtung dazu eingerichtet ist, eine Ausbringmenge landwirtschaftlicher Verteilgüter einzelner, gruppierter oder sämtlicher Verteilelemente an Mengenanteile anzupassen. Sind bspw. nur vereinzelt Begleitpflanzen vorhanden, die zu keiner wesentlichen Beeinträchtigung der Nutzpflanzen, insbesondere des Wachstum der Nutzpflanzen führen, kann in diesem Fall auch vorgesehen sein, dass die Ausbringmenge nicht angepasst wird oder entsprechend konstant gehalten wird.

Zur Beeinflussung der Biodiversität, d.h. um insbesondere die Biodiversität auf einem gewünschten Niveau zu erhalten, respektive diese auch gezielt zu erhöhen, ist erfindungsgemäß vorgesehen, dass der Pflanzenbestand Nutzpflanzen und Begleitvegetation aufweist und dass die Erfassungseinrichtung und/oder die Datenverarbeitungseinrichtung dazu eingerichtet ist, einen Mengenanteil der Begleitvegetation gegenüber den Nutzpflanzen zu detektieren und/oder zu definieren und dass die Datenverarbeitungseinrichtung dazu eingerichtet ist, eine Ausbringmenge landwirtschaftlicher Verteilgüter einzelner, gruppierter oder sämtlicher Verteilelemente derartig an Mengenanteile anzupassen, dass eine Mindestmenge an Begleitvegetation erhalten bleibt. So kann erfindungsgemäß bspw. vorgesehen sein, dass in der Datenverarbeitungseinrichtung Vergleichsgrößen eingegeben werden oder hinterlegt sind, anhand welcher Vergleichsgrößen eine Mindestmenge an Begleitvegetation erhalten bleibt, bspw. können dies Prozentuale Werte sein wie mindestens 5% oder mindestens 10% oder mindestens 25%, d.h. eine Anpassung der Ausbringmenge einzelner, gruppierter oder sämtlicher Verteilelemente erfolgt derartig, dass mindestens 5% oder mindestens 10% oder mindestens 25% der Begleitvegetation erhalten bleiben, d.h. bspw. nicht mit Spritzmittel behandelt (z.B. besprüht) werden.

Ergänzend wäre es auch denkbar Schadschwellen zu definieren, welche Schadschwellen wiederum definieren wieviel Begleitvegetation durch die Verteilgüter ggf. vernichtet werden und wieviel nicht.

Um die Gefahr von Resistenzen zu verringern und die Biodiversität positiv zu beeinflussen ist es gemäß einer weiteren Ausführungsvariante der Erfindung möglich, dass der Pflanzenbestand Nutzpflanzen und Begleitvegetation aufweist, insbesondere unterschiedliche Begleitpflanzensorten aufweisende Begleitvegetation aufweist. Wobei die Datenverarbeitungseinrichtung und/oder die Erfassungseinrichtung dazu eingerichtet ist, Arten von Begleitpflanzensorten zu detektieren und/oder zu definieren und dass die Datenverarbeitungseinrichtung dazu eingerichtet ist, eine Ausbringmenge landwirtschaftlicher Verteilgüter einzelner, gruppierter oder sämtlicher Verteilelemente derartig an Arten von Begleitpflanzensorten anzupassen, dass definierte und/oder definierbare Arten von Begleitpflanzen nicht behandelt werden. Somit kann vorgesehen sein, dass zunächst die Arten von Begleitpflanzen detektiert werden und anschließend nur die Arten von Begleitpflanzen entsprechend mit Verteilgut behandelt werden, welche im Wachstum für die Nutzpflanzen zu Beeinträchtigungen führen können, wobei wiederum die Arten vorab definiert werden können, bspw. manuell durch eine Bedienperson und/oder durch Datenübertragung (z.B. von einer Datenbank).

Es ist möglich, dass die Erfassungseinrichtung online mit der Datenverarbeitungseinrichtung signalverbunden und/oder signalverbindbar (z.B. drahtlos) ist und durch zumindest eine am Verteilgestänge angeordnete Kamera und/oder einen Sensor gebildet ist.

Es ist alternativ oder ergänzend möglich, dass die Erfassungseinrichtung mit der Datenverarbeitungseinrichtung signalverbunden und/oder signalverbindbar ist und durch zumindest eine nicht am Verteilgestänge angebaute Kamera und/oder Sensor gebildet ist, wobei die Kamera und/oder der Sensor vorzugsweise an einem Fluggerät (z.B. Drohne) oder an oder in einem mobilen Endgerät (z.B. Smartphone, Tablet-PC) angebaut und/oder integriert ist.

Es ist alternativ oder ergänzend möglich, dass die Erfassungseinrichtung offline (d.h. nicht fest mit der Verteilmaschine und/oder dem Verteilgestänge verbunden, bzw. angebaut) mit der Datenverarbeitungseinrichtung signalverbunden und/oder signalverbindbar (z.B. drahtlos) ist und durch ein Kartographisches System (z.B. Applikationskarte, Bedeckungskarte) und/oder ein Planungssystem (z.B. Spurplanungssystem, Routenplanungssystem) gebildet ist, wobei das Kartographische System und/oder das Planungssystem dazu eingerichtet sein können, um mittels dieses bspw. Positionen, Mengen und/oder Entwicklungsstadien von Begleitvegetation definieren zu können.

Es ist möglich, dass die Erfassungseinrichtung durch zumindest eine Kamera und/oder einen Sensor gebildet ist. Auch andere, Entwicklungsstadien detektierende Elemente sind denkbar und einsetzbar.

Zum exakten Detektieren von Entwicklungsstadien, kann gemäß einer weiteren Ausführungsvariante vorgesehen sein, dass einzelnen, gruppierten oder sämtlichen Verteilelementen wirktechnisch jeweils eine Erfassungseinrichtung zugeordnet ist und/oder mit diesen wirktechnisch gekoppelt ist.

Um eine möglichst schnelle Anpassung der Menge an Verteilgut zu erreichen, ist es gemäß einer weiteren Ausführungsvariante denkbar, dass die Datenverarbeitungseinrichtung dazu eingerichtet ist, eine Mindestausbringmenge landwirtschaftlicher Verteilgüter mit einzelnen, gruppierten oder sämtlichen Verteilelementen unabhängig vom Entwicklungsstadium anzupassen, und dass die Datenverarbeitungseinrichtung dazu eingerichtet ist, eine Mindestausbringmenge landwirtschaftlicher Verteilgüter einzelner, gruppierter oder sämtlicher Verteilelemente anhand von Entwicklungsstadien und/oder Anhand von Begleitvegetation zu übersteuern. D.h. es kann vorgesehen sein, dass mit sämtlichen Verteilelementen dauerhaft eine Grundmenge (z.B. Mindestausbringmenge) ausgebracht wird und das diese Grundmenge an einzelnen, gruppierten oder sämtlichen Verteilelementen anhand von Entwicklungsstadien und/oder anhand von Arten von Begleitvegetation (z.B. Arten von Begleitpflanzensorten und deren Entwicklungsstadium) übersteuert wird, vorzugsweise kurzzeitig erhöht wird.

Zur Erreichung einer zielgenauen, vorzugsweise einer punktgenauen Verteilung von landwirtschaftlichen Verteilgütern ist es möglich, dass der Pflanzenbestand Nutzpflanzen und Begleitvegetation aufweist und dass die Erfassungseinrichtung dazu eingerichtet ist, eine Position der Begleitvegetation zu definieren, vorzugsweise auf einer Ackerfläche zu definieren, und dass die Datenverarbeitungseinrichtung dazu eingerichtet ist, eine Ausbringmenge landwirtschaftlicher Verteilgüter einzelner, gruppierter oder sämtlicher Verteilelemente an eine Position anzupassen. So kann bspw. vorgesehen sein, dass mittels der Erfassungseinrichtung eine Position von Begleitvegetation definiert wird und wiederum die Verteilelemente entsprechend der Position gesteuert werden. Wobei hierbei die Erfassungseinrichtung bspw. mit einem Positionsbestimmungssystem (z.B. GPS-System) verbunden und/oder verbindbar sein kann.

Auch kann vorgesehen sein, dass Positionen von Begleitvegetation mittels eines Positionsbestimmungssystems wie bspw. GPS-Systems (z.B. mit einem Fluggerät, mobilen Endgeräten oder dergl.) definiert werden und diese GPS-Daten (d.h. diese Positionen) an die Datenverarbeitungseinrichtung übertragen werden.

Um eine zielgenaue Verteilung landwirtschaftlicher Verteilgüter noch weiter zu verbessern, ist es gemäß einer alternativen oder ergänzenden Ausführungsvariante denkbar, dass der Pflanzenbestand Nutzpflanzen und Begleitvegetation aufweist und dass die Erfassungseinrichtung dazu eingerichtet ist, eine Größe von Begleitvegetation zu detektieren und dass die Datenverarbeitungseinrichtung dazu eingerichtet ist, eine Ausbringmenge landwirtschaftlicher Verteilgüter einzelner, gruppierter oder sämtlicher Verteilelemente Anhand einer Größe und Anhand eines landwirtschaftlichen Verteilgut anzupassen. Anhand der Größe kann somit zweckmäßig eine kritische Menge an Verteilgut welche zur Bekämpfung einer Begleitvegetation erforderlich ist exakt definiert und mittels der Datenverarbeitungseinrichtung an einzelnen, gruppierten oder sämtlichen Verteilelementen entsprechend angepasst werden. D.h. somit kann insbesondere auch eine Verteilgutsorte entsprechend mit berücksichtigt werden.

Gemäß einer weiteren Ausführungsvariante kann vorgesehen sein, dass die Datenverarbeitungseinrichtung dazu eingerichtet ist, eine Anpassung einer Ausbringmenge neben einem Entwicklungsstadium auch Anhand eines Krankheitsbefalls der Nutzpflanzen und/oder der Begleitvegetation anzupassen. Wobei dieser Krankheitsbefall bspw. mittels der Erfassungseinrichtung detektiert werden kann.

Gemäß einer weiteren Ausführungsvariante kann vorgesehen sein, dass die Datenverarbeitungseinrichtung dazu eingerichtet ist, eine Ausbringmenge auch Anhand einer Fahrgeschwindigkeit der Verteilmaschine anzupassen, insbesondere Anhand von Beschleunigungen des Verteilgestänge bei Kurvenfahrten.

Gemäß einer weiteren Ausführungsvariante kann vorgesehen sein, dass die Datenverarbeitungseinrichtung dazu eingerichtet ist, eine Ausbringmenge auch Anhand einer Höhenführung des Verteilgestänge anzupassen.

Es sei darauf hingewiesen, dass im Kontext der Erfindung als landwirtschaftliche Verteilgüter, bspw. Spritzmittel, Pflanzenschutzmittel, Düngemittel und/oder dergl. eingesetzt werden. Welche Verteilgüter in flüssiger und/oder in fester (z.B. granularer) Form vorhanden sein können. Wobei die Verteilgüter insbesondere mittels Verteilelementen ausgebracht und verteilt werden können, und wobei die Verteilelemente bspw. durch Spritzdüsen, Prallelementen oder dergl. gebildet sein können.

Die Verteilelemente können gruppiert werden, d.h. mehrere Verteilelemente können gemeinsam mittels der Datenverarbeitungseinrichtung ansteuerbar sein und/oder angesteuert werden. Wobei eine Gruppe (gruppiert) von Verteilelementen bspw. einer Teilbreite entsprechen kann. Ferner kann eine Gruppe von Verteilelementen bspw. 4 bis 15 Verteilelemente (z.B. Spritzdüsen, Prallelemente, oder dergl.) umfassen.

Es ist auch denkbar, dass die Verteilelemente, bspw. die Spritzdüsen an einem sog. Mehrfahrdüsenstock angebaut sind, wobei an einem derartigen Mehrfachdüsenstock zumindest zwei oder mehr, unterschiedliche Verteileigenschaften (z.B. Zerstäubungseigenschaften) aufweisende Verteilelemente angebaut sein können. Gemäß einer Weiterbildung der Erfindung ist es zudem denkbar, dass anhand eines Entwicklungsstadium mittels der Datenverarbeitungseinrichtung unterschiedliche Verteilelemente angesteuert (z.B. aktiviert oder deaktiviert) werden können.

Es sei darauf hingewiesen, dass im Kontext der Erfindung ein Detektieren auch ein sensorisches Erfassen, Ermitteln oder dergl. umfassen oder beinhalten kann. Auch kann ein Detektieren auch ein Einlesen, eine Datenübertragung, ein Orten, oder ein Eingeben umfassen oder beinhalten.

Die Datenverarbeitungseinrichtung weist bspw. eine Rechnereinheit, einen Bordcomputer und/oder dergl. mit einem Steuerungs- und/oder Regelungsprogramm auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Datenverarbeitungseinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren, oder Sensoreinheiten, oder Sensoranordnungen integrierte Datenverarbeitungseinrichtungen. Ebenso sei darauf hingewiesen, dass die Sensoren / Messeinrichtungen / Erfassungseinrichtungen etc. jeweils als Rückkoppelung für eine Steuer- und/oder Regelgröße herangezogen werden können.

Es sei noch darauf hingewiesen, dass die Begriffe "Steuern" und "Regeln" bzw. "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit dem landwirtschaftlichen Verteilsystem offenbarte Merkmale auch Verfahrensgemäß und für eine landwirtschaftliche Verteilmaschine offenbart gelten und beanspruchbar sein. Die vorgenannten Aspekte und erfindungsgemäßen Merkmale und Ausführungsvarianten, insbesondere im Hinblick auf das Verteilsystem gelten somit auch für das Verfahren sowie für die Verteilmaschine und sind in beliebiger Weise und frei miteinander kombinierbar. In umgekehrter Weise gilt das gleiche, so dass auch alle Aspekte, erfindungsgemäße Merkmale und Ausführungsvarianten die im Zusammenhang mit dem Verfahren oder der Verteilmaschine offenbart sind, demnach auch für das Verteilsystem offenbart und entsprechend beanspruchbar sind.

Die Erfindung umfasst zur Lösung der Aufgaben zudem ein Verfahren zur Anpassung einer Ausbringmenge, zum Verteilen flüssiger und/oder fester landwirtschaftlicher Verteilgüter auf einem Pflanzenbestand, vorzugsweise für eine Feldspritze oder einen Düngerstreuer (z.B. pneumatischer Düngerstreuer).

Das Verfahren umfasst ein Bereitstellen eines Verteilgestänge, mit einer Mehrzahl von an diesem angeordneten, mit einem Vorratsbehälter für mindestens ein landwirtschaftliches Verteilgut verbundenen und/oder verbindbaren Verteilelementen, sowie ein Bereitstellen einer Erfassungseinrichtung welche dazu eingerichtet ist, Entwicklungsstadien des Pflanzenbestand zu detektieren, und Bereitstellen einer Datenverarbeitungseinrichtung.

Das Verfahren umfasst zudem eine Anpassung einer Ausbringmenge landwirtschaftlicher Verteilgüter einzelner, gruppierter oder sämtlicher Verteilelemente Anhand von Entwicklungsstadien mittels der Datenverarbeitungseinrichtung.

Wobei eine Anpassung der Ausbringmenge insbesondere mittels eines in der Datenverarbeitungseinrichtung hinterlegten Steuerungs- und/oder Regelungsprogramm erfolgt.

Die Erfindung umfasst zur Lösung der Aufgaben zudem eine landwirtschaftliche Verteilmaschine, vorzugsweise Feldspritze oder Düngerstreuer (z.B. pneumatischer Düngerstreuer).

Die Verteilmaschine weist, ein Komponenten der Verteilmaschine tragendes Chassis, sowie ein gegenüber dem Chassis höhenverstellbar am Chassis gelagertes Verteilgestänge auf, welches ein Mittelteil und links und rechts am Mittelteil mittels (z.B. aufrecht orientierter) Schwenkachsen schwenkbar angeordnete Seitenteile sowie eine Mehrzahl von an diesem angeordneten, mit einem Vorratsbehälter für mindestens ein landwirtschaftliches Verteilgut verbundenen und/oder verbindbaren (z.B. fluidisch verbundenen) Verteilelementen, aufweist.

Erfindungsgemäß ist vorgesehen, dass die Verteilmaschine ein Verteilsystem wie hierin offenbart umfasst, insbesondere ein Verteilsystem nach einem der Ansprüche 1 bis 14 umfasst. Alternativ oder ergänzend kann zudem vorgesehen sein, dass die Verteilmaschine dazu eingerichtet ist, ein Verfahren nach Anspruch 15 auszuführen.

Die Verteilmaschine dient insbesondere zum Ausbringen und Verteilen von landwirtschaftlichen Verteilgütern, bspw. Pflanzenschutzmittel. Und weist eine große Arbeitsbreite von 24 Meter, 30 Meter oder mehr auf.

Die Verteilmaschine, vorzugsweise die Feldspritze oder der Düngerstreuer, kann als eine selbstfahrende (z.B. auch autonom, oder teilautonom) oder als eine mittels eines Zugfahrzeug (z.B. Traktor) gezogene oder als eine an einem Zugfahrzeug angebaute (z.B. mittels Dreipunkt-Anhängung) Verteilmaschine ausgeführt sein.

Gemäß einer Weiterbildung der Erfindung kann vorgesehen sein, dass diese eine Datenverarbeitungseinrichtung umfasst welche mit einer Erfassungseinrichtung signalverbunden und/oder signalverbindbar (z.B. drahtlos) ist, wobei die Erfassungseinrichtung dazu eingerichtet ist, Entwicklungsstadien einer Begleitvegetation im Onlineverfahren zu detektieren und/oder im Offlineverfahren zu detektieren.

Wobei offline im Kontext der Erfindung insbesondere umfasst, dass die Erfassungseinrichtung nicht fest mit der Verteilmaschine, respektive dem Verteilgestänge verbunden ist. Vorzugsweise kann vorgesehen sein, dass die Datenverarbeitungseinrichtung mit einer Erfassungseinrichtung signalverbunden und/oder signalverbindbar ist, wobei die Erfassungseinrichtung einem mobilen Endgerät, einem Flugobjekt und/oder einem Planungssystem zugeordnet sein kann oder dieses umfassen kann. Dementgegen umfasst online im Kontext der Erfindung insbesondere, dass die Erfassungseinrichtung der Verteilmaschine, respektive dem Verteilgestänge zugeordnet ist bzw. mit diesem räumlich fest verbunden ist. Online kann dementsprechend insbesondere während der Arbeit der Verteilmaschine detektierte Livedaten umfassen.

Die zuvor beschriebenen bevorzugten Ausführungsformen, Merkmale und Aspekte der Erfindung sind beliebig und frei miteinander kombinierbar. Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht eines Ausführungsbeispiels einer landwirtschaftlichen Verteilmaschine,
- Figur 2: eine Draufsicht einer Verteilmaschine gemäß der Figur 1,
- Figur 3: eine schematische Darstellung eines Ausführungsbeispiels eines erfindungsgemäßen Verteilsystem.

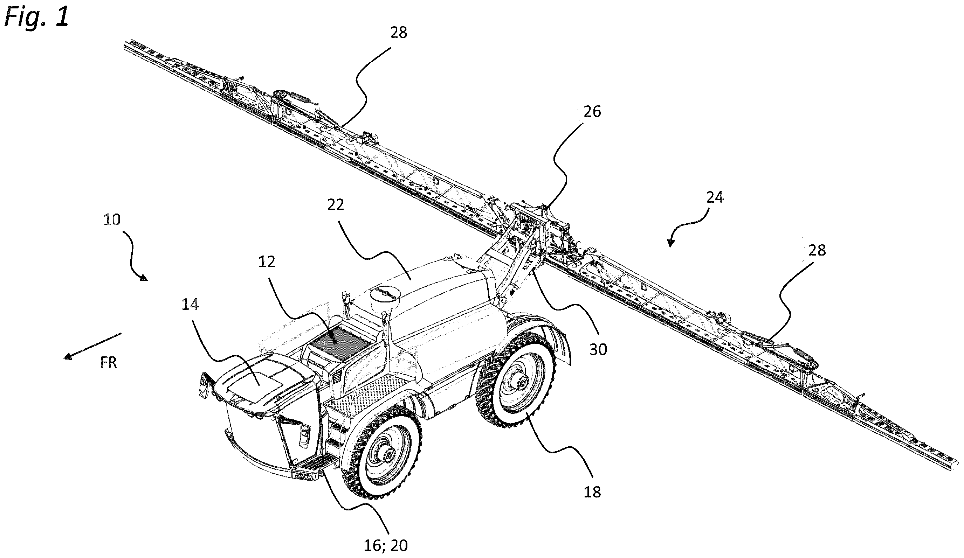

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie das erfindungsgemäße Verteilsystem, das erfindungsgemäße Verfahren und die erfindungsgemäße Verteilmaschine ausgestaltet und ausgeführt sein können und stellen keine abschließende Begrenzung dar.

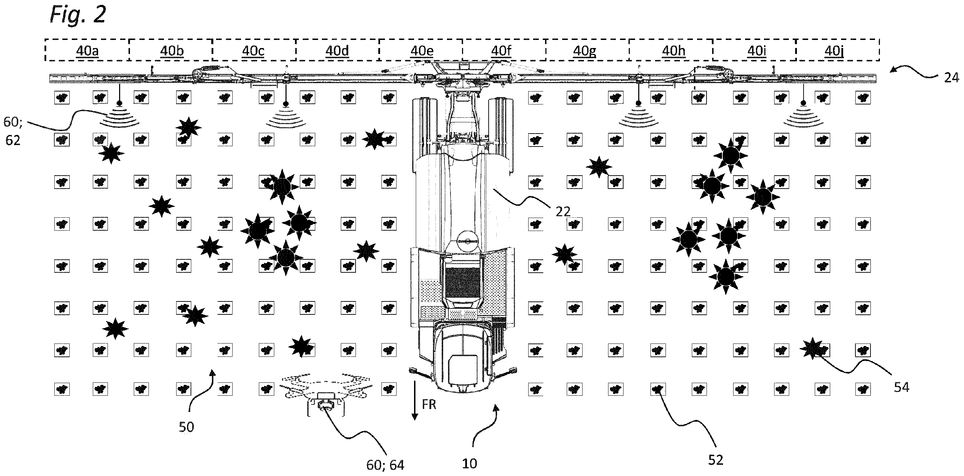

Eine Ausführungsvariante einer landwirtschaftlichen Verteilmaschine 10, vorzugsweise einer Feldspritze und/oder eines Düngerstreuer geht aus der Perspektivansicht der Figur 1 und der Draufsicht der Figur 2 hervor. Die Verteilmaschine 10 der Ausführungsbeispiele ist als selbstfahrende Feldspritze ausgeführt und mit einer Motoreinheit 12 und einer Fahrerkabine 14 für eine Bedienperson ausgestattet.

Die Verteilmaschine 10 umfasst insbesondere ein Verteilsystem 100 wie hierin beschrieben. Insbesondere umfasst die Verteilmaschine ein Verteilsystem 100 nach einem der Ansprüche 1 bis 16. Die Verteilmaschine 10 ist alternativ oder ergänzend zur Durchführung eines Verfahrens zur Anpassung einer Ausbringmenge wie hierin beschrieben, insbesondere eines Verfahrens nach Verfahrensanspruch 17, ausgebildet.

Gemäß der Ausführungsbeispiele umfasst die Verteilmaschine 10 ein, Komponenten der Verteilmaschine 10 tragendes Chassis 16 mit einem Fahrwerk 18 und einer Rahmenkonstruktion 20. Zum Mitführen und Bereitstellen von landwirtschaftlichem Verteilgut (z.B. Spritzmittel, Pflanzenschutzmittel und/oder dergl.) umfasst die Verteilmaschine 10 zudem einen Vorratsbehälter 22. Zum Verteilen des Verteilgut umfasst die Verteilmaschine 10 darüber hinaus ein gegenüber dem Chassis 16 höhenverstellbar am Chassis 16 gelagertes Verteilgestänge 24, insbesondere in Form eines Spritzgestänge.

Das Verteilgestänge 24 ist in einer Arbeitsstellung dargestellt und erstreckt sich in einer großen Arbeitsbreite (z.B. 24 Meter, 30 Meter oder mehr) quer zur Fahrtrichtung FR. Das Verteilgestänge 24 setzt sich aus einem Mittelteil 26 und links und rechts am Mittelteil 26 mittels Schwenkachsen schwenkbar angeordneten Seitenteilen 28 zusammen.

Am Verteilgestänge 24 sind zum Verteilen und Ausbringen des landwirtschaftlichen Verteilgut eine Mehrzahl von beabstandet zueinander angeordnete Verteilelemente (z.B. Spritzdüsen), die mit dem Vorratsbehälters 22 verbunden (z.B. fluidisch) sind, angebracht. Die Verteilelemente können einzeln, gruppiert oder gesamt (d.h. sämtliche) mittels einer Datenverarbeitungseinrichtung 150 angesteuert werden.

Das Verteilgestänge 24 ist höhenverstellbar gegenüber dem Chassis 16, wobei zur Veränderung einer Höhenlage des Verteilgestänge 24 gegenüber dem Chassis, respektive gegenüber einem Pflanzenbestand 50 (z.B. Nutzpflanzen 52; Begleitvegetation 54) eine Stelleinrichtung 30 vorgesehen ist, welche Stelleinrichtung 30 bspw. durch einen oder mehrere Aktuator(en) (z.B. Hydraulikzylinder und/oder Pneumatikzylinder) gebildet sein kann, und welche mit einer Datenverarbeitungseinrichtung 150, drahtgebunden und/oder drahtlos signalverbunden und/oder signalverbindbar sein kann.

Weitere Details der Erfindung gehen aus der Draufsicht der Figur 2 hervor. Eine landwirtschaftliche Verteilmaschine 10 wird über einen Pflanzenbestand 50 bewegt, welcher Pflanzenbestand 50 eine Vielzahl von Nutzpflanzen 52 und eine Vielzahl von Pflanzen einer Begleitvegetation 50 aufweist.

Die Verteilmaschine 10 dient zur Verteilung fester und/oder flüssiger landwirtschaftlicher Verteilgüter über dem Pflanzenbestand 52 und weist hierfür eine Mehrzahl von Verteilelementen auf, wobei die Verteilelemente jeweils in Gruppen von Verteilelementen 40a - 40j aufgeteilt sind, was gemäß der Figur 2 schematisch dargestellt ist. Die Verteilelemente einer Gruppe 40a - 40j von Verteilelementen erstrecken sich über eine Teilbreite des Verteilgestänge 24, wobei eine Gruppe 40a - 40j von Verteilelementen bspw. zwischen 4 und 15 Verteilelemente (z.B. Spritzdüsen, Prallelemente) umfasst. Es sei darauf hingewiesen, dass die Verteilelemente jeweils auch einzeln, d.h. nicht gruppiert, bspw. mittels der Datenverarbeitungseinrichtung 150 ansteuerbar sein können oder das sämtliche Verteilelemente unabhängigen von einer Gruppierung mittels der Datenverarbeitungseinrichtung 150 ansteuerbar sein können.

Die einzelnen, gruppierten oder sämtlichen Verteilelemente sind jeweils mit einem Vorratsbehälter 22 für wenigstens ein landwirtschaftliches Verteilgut verbunden und/oder verbindbar (z.B. fluidisch verbunden).

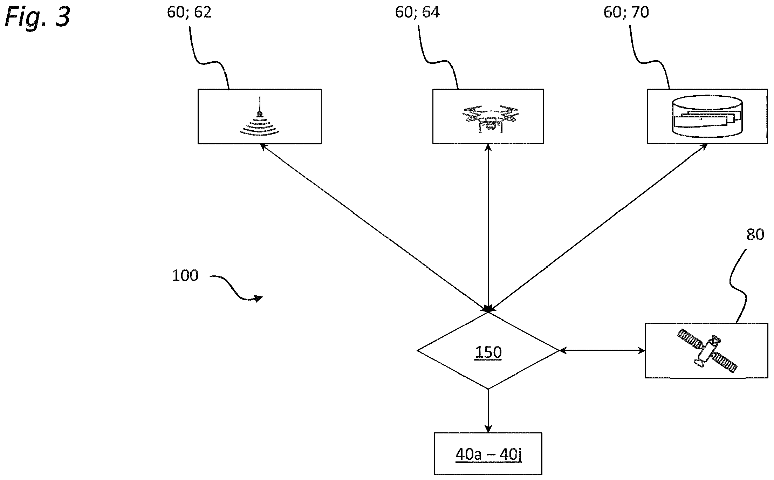

Weitere Details eines Erfindungsgemäßen Verteilsystem und eines erfindungsgemäßen Verfahrens gehen zudem aus der schematischen Darstellung der Figur 3 hervor.

Die Verteilmaschine 10, respektive das Verteilsystem 100 umfasst eine Datenverarbeitungseinrichtung 150 welche dazu eingerichtet ist, die Ausbringmenge an einzelnen, gruppierten oder sämtlichen Verteilelementen anzupassen, insbesondere anhand von Entwicklungsstadien anzupassen. Wobei es somit möglich ist, die Ausbringmenge an landwirtschaftlichem Verteilgut gezielt nur in Bereichen des Pflanzenbestand 50 anzupassen in denen dies auch, bspw. aufgrund von Begleitvegetation 54 erforderlich ist.

So handelt es sich gemäß der Figur 2 im Bereich der Gruppe 40a; 40b; 40e; 40g; 40j an Verteilelementen jeweils um kleine Pflanzen einer Begleitvegetation 54, so dass in diesen Bereichen andere Mengen an Verteilgut erforderlich sind als bspw. in Bereichen der Gruppe 40c; 40d; 40h; 40i an Verteilelementen, bei denen die Pflanzen der Begleitvegetation 54 relativ groß sind, insbesondere um ein vielfaches größer sind als die Pflanzen der Nutzpflanze bzw. Kulturpflanze 52.

Zur Erfassung des Entwicklungsstadium der Nutzpflanzen und/oder der Begleitvegetation umfasst die Verteilmaschine 10, respektive das Verteilsystem 100 eine Erfassungseinrichtung 60.

Die Erfassungseinrichtung 60 kann online mit der Datenverarbeitungseinrichtung signalverbunden und/oder signalverbindbar sein und durch zumindest eine, vorzugsweise mehrere, am Verteilgestänge 24 angeordnete Kameras und/oder Sensoren 62 gebildet sein.

Die Erfassungseinrichtung 60 kann alternativ oder ergänzend offline mit der Datenverarbeitungseinrichtung 150 signalverbunden und/oder signalverbindbar, vorzugsweise drahtlos signalverbunden und/oder signalverbindbar, sein und durch zumindest eine nicht am Verteilgestänge 24 angebaute Kamera und/oder Sensor 62 gebildet sein. Wobei die Kamera und/oder der Sensor 62 gemäß dieser Ausführungsvariante an einem Fluggerät 64 (z.B. Drohne) angebaut oder in diesem integriert sein kann.

Es ist alternativ oder ergänzend zudem möglich, dass die Erfassungseinrichtung 60 durch ein Kartographisches System und/oder ein Planungssystem 70 gebildet ist, wobei das Planungssystem 70 wiederum mit der Datenverarbeitungseinrichtung 150 signalverbunden und/oder signalverbindbar (z.B. drahtlos) ist. Das Planungssystem 70 kann zudem mit einem Positionsbestimmungssystem (z.B. GPS-System, RTK-System) signalverbunden und/oder signalverbindbar sein, um somit Positionen von Begleitvegetation, vorzugsweise auf einer Ackerfläche, zu definieren und um somit eine positionsgenaue Verteilung von landwirtschaftlichem Verteilgut auch einer Ackerfläche, respektive auf einem Pflanzenbestand zu ermöglichen.

Wie aus der Figur 2 hervorgeht, umfasst die Verteilmaschine 10 vier Sensoren 62 die am Verteilgestänge 24 montiert sind sowie ein Fluggerät 64 (z.B. Drohne) an welchem zudem zumindest eine Kamera und/oder ein Sensor 62 montiert und/oder integriert sein kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung wie in den Ansprüchen definiert verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

**Bezugszeichenliste:**

| | | | |
|---|---|---|---|
| 10 | Verteilmaschine | 54 | Begleitvegetation |
| 12 | Motoreinheit | | |
| 14 | Fahrerkabine | 60 | Erfassungseinrichtung |
| 16 | Chassis | 62 | Sensor |
| 18 | Fahrwerk | 64 | Fluggerät |
| 20 | Rahmenkonstruktion | | |
| 22 | Vorratsbehälter | 70 | Planungssystem |
| 24 | Verteilgestänge | 80 | Positionsbestimmungssystem |
| 26 | Mittelteil | | |
| 28 | Seitenteil | 100 | Verteilsystem |
| 30 | Stelleinrichtung | | |
| | | 150 | Datenverarbeitungseinrichtung |
| 40a - 40j | Gruppe von Verteilelementen | | |
| | | FR | Fahrtrichtung |
| 50 | Pflanzenbestand | | |
| 52 | Nutzpflanze; Kulturpflanze | | |

## Patentansprüche

1. Landwirtschaftliches Verteilsystem (100), zum Verteilen flüssiger und/oder fester landwirtschaftlicher Verteilgüter auf einem Pflanzenbestand (50), vorzugsweise für eine Feldspritze oder einen Düngerstreuer, mit
- einem Verteilgestänge (24), mit einer Mehrzahl von an diesem angeordneten, mit einem Vorratsbehälter (22) für mindestens ein landwirtschaftliches Verteilgut verbundenen und/oder verbindbaren Verteilelementen, und
- einer Erfassungseinrichtung (60), welche dazu eingerichtet ist, Entwicklungsstadien des Pflanzenbestands (50) zu detektieren, und
- mit einer Datenverarbeitungseinrichtung (150), wobei die Datenverarbeitungseinrichtung (150) dazu eingerichtet ist, eine Ausbringmenge landwirtschaftlicher Verteilgüter einzelner, gruppierter oder sämtlicher Verteilelemente an die Entwicklungsstadien anzupassen,
wobei der Pflanzenbestand (50) Nutzpflanzen (52) und Begleitvegetation (54) aufweist, **dadurch gekennzeichnet,**
**dass** die Erfassungseinrichtung (60) und/oder die Datenverarbeitungseinrichtung (150) dazu eingerichtet ist, einen Mengenanteil der Begleitvegetation (54) gegenüber den Nutzpflanzen (52) zu detektieren und dass die Datenverarbeitungseinrichtung (150) dazu eingerichtet ist, eine Ausbringmenge landwirtschaftlicher Verteilgüter einzelner, gruppierter oder sämtlicher Verteilelemente derartig an den Mengenanteil der Begleitvegetation (54) anzupassen, dass eine Mindestmenge an Begleitvegetation (54) erhalten bleibt.

2. Verteilsystem (100) nach einem der vorhergehenden Ansprüche, **dadurch gekennzeichnet, dass** die Datenverarbeitungseinrichtung (150) dazu eingerichtet ist, die Ausbringmenge an einzelnen, gruppierten oder sämtlichen Verteilelementen unabhängig voneinander an die Entwicklungsstadien anzupassen.

3. Verteilsystem (100) nach einem der vorhergehenden Ansprüche, **dadurch gekennzeichnet, dass** die Datenverarbeitungseinrichtung (150) dazu eingerichtet ist, die Anpassung der Ausbringmenge an einzelnen, gruppierten oder sämtlichen Verteilelementen durch eine Pulsweitenmodulation umzusetzen.

4. Verteilsystem (100) nach einem der vorhergehenden Ansprüche, **dadurch gekennzeichnet**, und dass die Erfassungseinrichtung (60) dazu eingerichtet ist, Entwicklungsstadien von Nutzpflanzen (52) und/oder Begleitvegetation (54) zu detektieren, insbesondere eine Größe von Nutzpflanzen (52) und/oder Begleitvegetation (54) zu detektieren.

5. Verteilsystem (100) nach einem der vorhergehenden Ansprüche, **dadurch gekennzeichnet, dass** die Erfassungseinrichtung (60) dazu eingerichtet ist, Entwicklungsstadien von Begleitvegetation (54) zu detektieren, vorzugsweise eine Größe von Begleitvegetation (54) zu detektieren, und dass die Datenverarbeitungseinrichtung (150) dazu eingerichtet ist, eine Ausbringmenge landwirtschaftlicher Verteilgüter einzelner, gruppierter oder sämtlicher Verteilelemente an eine Größe, vorzugsweise die Größe der Begleitvegetation (54), anzupassen.

6. Verteilsystem (100) nach einem der vorhergehenden Ansprüche, **dadurch gekennzeichnet, dass** die Begleitvegetation (54) unterschiedliche Begleitpflanzensorten aufweisen kann, und dass die Erfassungseinrichtung (60) dazu eingerichtet ist, Entwicklungsstadien von Nutzpflanzen (52) und/oder von Begleitpflanzensorten zu detektieren, insbesondere eine Größe und/oder Arten von Begleitpflanzensorten zu detektieren und dass die Datenverarbeitungseinrichtung (150) dazu eingerichtet ist, eine Ausbringmenge landwirtschaftlicher Verteilgüter einzelner, gruppierter oder sämtlicher Verteilelemente an Begleitpflanzensorten anzupassen, insbesondere an die Größe und/oder eine Art von Begleitpflanzensorten anzupassen.

7. Verteilsystem (100) nach einem der vorhergehenden Ansprüche, **dadurch gekennzeichnet, dass** die Begleitvegetation (54) unterschiedliche Begleitpflanzensorten aufweisen kann, und dass die Datenverarbeitungseinrichtung (150) und/oder die Erfassungseinrichtung (60) dazu eingerichtet ist, Arten von Begleitpflanzensorten zu detektieren und/oder zu definieren und dass die Datenverarbeitungseinrichtung (150) dazu eingerichtet ist, eine Ausbringmenge landwirtschaftlicher Verteilgüter einzelner, gruppierter oder sämtlicher Verteilelemente derartig an Arten von Begleitpflanzensorten anzupassen, dass definierte und/oder definierbare Arten von Begleitpflanzen nicht behandelt werden.

8. Verteilsystem (100) nach einem der vorhergehenden Ansprüche, **dadurch gekennzeichnet, dass** die Erfassungseinrichtung (60) mit der Datenverarbeitungseinrichtung (150) signalverbunden und/oder signalverbindbar ist und durch zumindest eine am Verteilgestänge (24) angeordnete Kamera und/oder einen Sensor (62) gebildet ist.

9. Verteilsystem (100) nach einem der vorhergehenden Ansprüche, **dadurch gekennzeichnet, dass** die Erfassungseinrichtung (60) mit der Datenverarbeitungseinrichtung (150) signalverbunden und/oder signalverbindbar ist und durch zumindest eine nicht am Verteilgestänge (24) angebaute Kamera und/oder Sensor (62) gebildet ist, wobei die Kamera und/oder der Sensor (62) vorzugsweise an einem Fluggerät oder an oder in einem mobilen Endgerät angebaut und/oder integriert ist.

10. Verteilsystem (100) nach einem der vorhergehenden Ansprüche, **dadurch gekennzeichnet, dass** die Erfassungseinrichtung (60) durch zumindest eine Kamera und/oder einen Sensor (62) gebildet ist.

11. Verteilsystem (100) nach einem der vorhergehenden Ansprüche, **dadurch gekennzeichnet, dass** einzelnen, gruppierten oder sämtlichen Verteilelementen wirktechnisch jeweils eine Erfassungseinrichtung (60) zugeordnet ist.

12. Verteilsystem (100) nach einem der vorhergehenden Ansprüche, **dadurch gekennzeichnet, dass** die Datenverarbeitungseinrichtung (150) dazu eingerichtet ist, eine Mindestausbringmenge landwirtschaftlicher Verteilgüter mit einzelnen, gruppierten oder sämtlichen Verteilelementen unabhängig vom Entwicklungsstadium anzupassen, und dass die Datenverarbeitungseinrichtung (150) dazu eingerichtet ist, eine Mindestausbringmenge landwirtschaftlicher Verteilgüter einzelner, gruppierter oder sämtlicher Verteilelemente anhand von Entwicklungsstadien und/oder Anhand von Arten von Begleitvegetation zu übersteuern.

13. Verteilsystem (100) nach einem der vorhergehenden Ansprüche, **dadurch gekennzeichnet, dass** der Pflanzenbestand (50) Nutzpflanzen (52) und Begleitvegetation (54) aufweist und dass die Erfassungseinrichtung (60) dazu eingerichtet ist, eine Position der Begleitvegetation (54) zu definieren, vorzugsweise auf einer Ackerfläche zu definieren, und dass die Datenverarbeitungseinrichtung (150) dazu eingerichtet ist, eine Ausbringmenge landwirtschaftlicher Verteilgüter einzelner, gruppierter oder sämtlicher Verteilelemente an eine Position anzupassen.

14. Verteilsystem (100), nach einem der vorhergehenden Ansprüche, **dadurch gekennzeichnet, dass** der Pflanzenbestand (50) Nutzpflanzen (52) und Begleitvegetation (54) aufweist und dass die Erfassungseinrichtung (60) dazu eingerichtet ist, eine Größe von Begleitvegetation (54) zu detektieren und dass die Datenverarbeitungseinrichtung (150) dazu eingerichtet ist, eine Ausbringmenge landwirtschaftlicher Verteilgüter einzelner, gruppierter oder sämtlicher Verteilelemente anhand einer Größe und anhand eines landwirtschaftlichen Verteilgut anzupassen.

15. Verfahren zur Anpassung einer Ausbringmenge, zum Verteilen flüssiger und/oder fester landwirtschaftlicher Verteilgüter auf einem Pflanzenbestand (50), vorzugsweise für eine Feldspritze oder einen Düngerstreuer, umfassend die Schritte,
- Bereitstellen eines Verteilgestänge (24), mit einer Mehrzahl von an diesem angeordneten, mit einem Vorratsbehälter (22) für mindestens ein landwirtschaftliches Verteilgut verbundenen und/oder verbindbaren Verteilelementen, sowie Bereitstellen einer Erfassungseinrichtung (60) welche dazu eingerichtet ist, Entwicklungsstadien des Pflanzenbestands (50) zu detektieren, und Bereitstellen einer Datenverarbeitungseinrichtung (150),
- Anpassung einer Ausbringmenge landwirtschaftlicher Verteilgüter einzelner, gruppierter oder sämtlicher Verteilelemente Anhand von Entwicklungsstadien mittels der Datenverarbeitungseinrichtung (150),
wobei der Pflanzenbestand (50) Nutzpflanzen (52) und Begleitvegetation (54) aufweist, **dadurch gekennzeichnet,**
**dass** die Erfassungseinrichtung (60) und/oder die Datenverarbeitungseinrichtung (150) dazu eingerichtet ist, einen Mengenanteil der Begleitvegetation (54) gegenüber den Nutzpflanzen (52) zu detektieren und dass die Datenverarbeitungseinrichtung (150) dazu eingerichtet ist, eine Ausbringmenge landwirtschaftlicher Verteilgüter einzelner, gruppierter oder sämtlicher Verteilelemente derartig an den Mengenanteil der Begleitvegetation (54) anzupassen, dass eine Mindestmenge an Begleitvegetation (54) erhalten bleibt.

16. Landwirtschaftliche Verteilmaschine (10), vorzugsweise Feldspritze oder Düngerstreuer, mit
- einem Komponenten der Verteilmaschine (10) tragenden Chassis (16),
- einem gegenüber dem Chassis (16) höhenverstellbar am Chassis (16) gelagerten Verteilgestänge (24), welches ein Mittelteil und links und rechts am Mittelteil mittels Schwenkachsen schwenkbar angeordnete Seitenteile (28) sowie eine Mehrzahl von an diesem angeordneten, mit einem Vorratsbehälter (22) für mindestens ein landwirtschaftliches Verteilgut verbundenen und/oder verbindbaren Verteilelementen,
**dadurch gekennzeichnet, dass** die Verteilmaschine (10) ein Verteilsystem (100) nach einem der Ansprüche 1 bis 14 umfasst und/oder dass die Verteilmaschine (10) dazu eingerichtet ist, ein Verfahren nach Anspruch 15 auszuführen.

17. Verteilmaschine (10), nach Anspruch 16, **dadurch gekennzeichnet, dass** diese eine Datenverarbeitungseinrichtung (150) umfasst welche mit einer Erfassungseinrichtung (60) signalverbunden und/oder signalverbindbar ist, wobei die Erfassungseinrichtung (60) dazu eingerichtet ist, Entwicklungsstadien einer Begleitvegetation (54) im Onlineverfahren zu detektieren und/oder im Offlineverfahren zu detektieren.

## Claims

1. Agricultural distribution system (100), for distributing liquid and/or solid agricultural distribution materials on a crop (50), preferably for a field sprayer or a fertiliser spreader, comprising
- a distribution boom (24), comprising a plurality of distribution elements arranged thereon and connected and/or connectable to a storage container (22) for at least one agricultural distribution material, and
- a detection device (60) configured to detect development stages of the crop stand (50), and
- a data processing device (150), wherein the data processing device (150) is configured to adjust an application amount of agricultural distribution materials of individual, grouped or all distribution elements according to the development stages,
wherein the crop stand (50) comprises crop plants (52) and accompanying vegetation (54), **characterised in that** the detection device (60) and/or the data processing device (150) is configured to detect a quantity proportion of the accompanying vegetation (54) relative to the crop plants (52) and **in that** the data processing device (150) is configured for this purpose, to adjust an application amount of agricultural distribution materials of individual, grouped or all distribution elements to the quantity proportion of the accompanying vegetation in such a way that a minimum quantity of accompanying vegetation (54) is preserved.

2. A distribution system (100) according to any one of the preceding claims, **characterised in that** the data processing device (150) is configured to adjust the application amount at individual, grouped or all distribution elements independently of one another to the development stages.

3. A distribution system (100) according to one of the preceding claims, **characterised in that** the data processing device (150) is configured to implement the adjustment of the application amount at individual, grouped or all distribution elements by means of pulse width modulation.

4. A distribution system (100) according to one of the preceding claims, **characterised in that** the detection device (60) is configured to detect development stages of crop plants (52) and/or accompanying vegetation (54), preferably to detect a size of crop plants (52) and/or accompanying vegetation (54).

5. A distribution system (100) according to one of the preceding claims, **characterised in that** the detection device (60) is configured to detect development stages of accompanying vegetation (54), preferably to detect a size of accompanying vegetation (54), and that the data processing device (150) is configured to adjust an application amount of agricultural distribution materials of individual, grouped or all distribution elements to a size, preferably the size of the accompanying vegetation (54).

6. A distribution system (100) according to one of the preceding claims, **characterized in that** the accompanying vegetation (54) can have different accompanying plant varieties, and **in that** the detection device (60) is configured to detect development stages of crop plants (52) and/or of accompanying plant varieties, preferably to detect a size and/or types of accompanying plant varieties, and **in that** the data processing device (150) is configured to adjust an application amount of agricultural distribution materials of individual, grouped or all distribution elements to accompanying plant varieties, preferably to adjust it to the size and/or a type of accompanying plant varieties.

7. A distribution system (100) according to one of the preceding claims, **characterised in that** the accompanying vegetation (54) can have different accompanying plant varieties and that the data processing device (150) and/or the detection device (60) is configured to detect and/or define types of accompanying plant varieties, to detect and/or define types of accompanying plant varieties, and **in that** the data processing device (150) is configured to adjust an application amount of agricultural distribution materials of individual, grouped or all distribution elements to types of accompanying plant varieties in such a way that defined and/or definable types of accompanying plants are not treated.

8. A distribution system (100) according to one of the preceding claims, **characterised in that** the detection device (60) is signal-connected and/or signal-connectable to the data processing device (150) and is formed by at least one camera arranged on the distribution boom (24) and/or a sensor (62).

9. A distribution system (100) according to one of the preceding claims, **characterised in that** the detection device (60) is signal-connected and/or signal-connectable to the data processing device (150) and is formed by at least one camera and/or sensor (62) not mounted on the distribution boom (24), the camera and/or sensor (62) preferably being mounted on and/or integrated in an flying apparatus or on or in a mobile terminal.

10. A distribution system (100) according to one of the preceding claims, **characterised in that** the detection device (60) is formed by at least one camera and/or one sensor (62).

11. A distribution system (100) according to one of the preceding claims, **characterised in that** a respective detection device (60) is operatively associated with individual, grouped or all distribution elements.

12. A distribution system (100) according to any one of the preceding claims, **characterised in that** the data processing device (150) is configured to adjust a minimum application amount of agricultural distribution materials with individual, grouped or all distribution elements independently of the development stage, and **in that** the data processing device (150) is configured to override a minimum application amount of agricultural distribution materials of individual, grouped or all distribution elements on the basis of development stages and/or on the basis of types of accompanying vegetation.

13. A distribution system (100) according to any one of the preceding claims, **characterized in that** the crop stand (50) comprises crop plants (52) and accompanying vegetation (54) and that the detection device (60) is configured to define a position of the accompanying vegetation (54), preferably on an arable land, and that the data processing device (150) is configured to adjust an application amount of agricultural distribution materials of individual, grouped or all distribution elements to a position.

14. A distribution system (100) according to one of the preceding claims, **characterized in that** the crop stand (50) comprises crop plants (52) and accompanying vegetation (54), and **in that** the detection device (60) is configured to detect a size of accompanying vegetation (54), and **in that** the data processing device (150) is configured to adjust an application amount of agricultural distribution materials of individual, grouped or all distribution elements on the basis of a size and on the basis of an agricultural distribution material.

15. A method for adjusting an application amount, for distributing liquid and/or solid agricultural distribution materials on a crop (50), preferably for a field sprayer or a fertilizer spreader, comprising the steps of,
- Providing a distribution boom (24) with a plurality of distribution elements arranged thereon and connected and/or connectable to a storage container (22) for at least one agricultural distribution material, as well as providing a detection device (60) which is configured to detect development stages of the crop stand (50), and providing a data processing device (150),
- Adjusting a spreading amount of agricultural distribution materials of individual, grouped or all distribution elements on the basis of development stages by means of the data processing device (150),
wherein the crop stand (50) comprises crop plants (52) and accompanying vegetation (54), **characterised in that**
the detection device (60) and/or the data processing device (150) is configured to detect a quantity proportion of the accompanying vegetation (54) relative to the crop plants (52) and **in that** the data processing device (150) is configured for this purpose, to adjust an application amount of agricultural distribution materials of individual, grouped or all distribution elements to the quantity proportion of the accompanying vegetation in such a way that a minimum quantity of accompanying vegetation (54) is preserved.

16. Agricultural distribution machine (10), preferably a field sprayer or fertiliser spreader, with
- a chassis (16) supporting components of the distribution machine (10),
- a distributing boom (24) which is mounted on the chassis (16) such that it can be adjusted in height relative to the chassis (16) and which comprises a central part and side parts (28) which are arranged on the left and right of the central part such that they can be pivoted by means of pivot axes, as well as a plurality of distributing elements which are arranged thereon and which are connected and/or can be connected to a storage container (22) for at least one agricultural distributing material, **characterised in that** the distribution machine (10) comprises a distribution system (100) according to any one of claims 1 to 14 and/or **in that** the distribution machine (10) is configured to perform a method according to claim 15.

17. A distributing machine (10) according to claim 16, **characterised in that** it comprises a data processing device (150) which is signal-connected and/or signal-connectable to a detection device (60), wherein the detection device (60) is configured to detect development stages of accompanying vegetation (54) in the online process and/or to detect them in the offline process.

## Revendications

1. Système d'épandage (100) agricole destiné à épandre des produits d'épandage agricoles liquides et/ou solides sur un peuplement végétal (50), de préférence un pulvérisateur agricole ou un épandeur d'engrais, comprenant
- une rampe d'épandage (24), comprenant une pluralité d'éléments d'épandage disposés sur celle-ci et reliés et/ou pouvant être reliés à un réservoir (22) pour au moins un produit d'épandage agricole, et
- un dispositif d'acquisition (60), lequel est conçu pour détecter des stades de développement du peuplement végétal (50), et
- comprenant un dispositif de traitement de données (150), le dispositif de traitement de données (150) étant conçu pour adapter une quantité d'application des produits d'épandage agricoles des éléments d'épandage individuels, groupés ou de la totalité de ceux-ci aux stades de développement,
le peuplement végétal (50) possédant des plantes utiles (52) et de la végétation accompagnante (54), **caractérisé en ce que**
le dispositif d'acquisition (60) et/ou le dispositif de traitement de données (150) est conçu pour détecter une proportion de la végétation accompagnante (54) par rapport aux plantes utiles (52) et **en ce que** le dispositif de traitement de données (150) est conçu pour adapter une quantité d'application des produits d'épandage agricoles des éléments d'épandage individuels, groupés ou de la totalité de ceux-ci à la proportion de la végétation accompagnante (54) de telle sorte qu'une quantité minimale de la végétation accompagnante (54) soit conservée.

2. Système d'épandage (100) selon l'une des revendications précédentes, **caractérisé en ce que** le dispositif de traitement de données (150) est conçu pour adapter la quantité d'application au niveau des éléments d'épandage individuels, groupés ou de la totalité de ceux-ci indépendamment les uns des autres aux stades de développement.

3. Système d'épandage (100) selon l'une des revendications précédentes, **caractérisé en ce que** le dispositif de traitement de données (150) est conçu pour mettre en œuvre l'adaptation de la quantité d'application au niveau des éléments d'épandage individuels, groupés ou de la totalité de ceux-ci par une modulation d'impulsions en largeur.

4. Système d'épandage (100) selon l'une des revendications précédentes, **caractérisé en ce que** le dispositif d'acquisition (60) est conçu pour détecter les stades de développement de plantes utiles (52) et/ou d'une végétation accompagnante (54), notamment pour détecter une taille de plantes utiles (52) et/ou d'une végétation accompagnante (54).

5. Système d'épandage (100) selon l'une des revendications précédentes, **caractérisé en ce que** le dispositif d'acquisition (60) est conçu pour détecter les stades de développement d'une végétation accompagnante (54), de préférence pour détecter une taille d'une végétation accompagnante (54), et **en ce que** le dispositif de traitement de données (150) est conçu pour adapter une quantité d'application de produits d'épandage agricoles des éléments d'épandage individuels, groupés ou de la totalité de ceux-ci à une taille, de préférence la taille de la végétation accompagnante (54).

6. Système d'épandage (100) selon l'une des revendications précédentes, **caractérisé en ce que** la végétation accompagnante (54) peut présenter différentes variétés de plantes accompagnantes, et **en ce que** le dispositif d'acquisition (60) est conçu pour détecter les stades de développement de plantes utiles (52) et/ou de variétés de plantes accompagnantes, notamment une taille et/ou des types de variétés de plantes accompagnantes et **en ce que** le dispositif de traitement de données (150) est conçu pour adapter une quantité d'application de produits d'épandage agricoles des éléments d'épandage individuels, groupés ou de la totalité de ceux-ci à des variétés de plantes accompagnantes, notamment à la taille et/ou à un type de variétés de plantes accompagnantes.

7. Système d'épandage (100) selon l'une des revendications précédentes, **caractérisé en ce que** la végétation accompagnante (54) peut présenter différentes variétés de plantes accompagnantes, et **en ce que** le dispositif de traitement de données (150) et/ou le dispositif d'acquisition (60) est conçu pour détecter et/ou définir des types de variétés de plantes accompagnantes et **en ce que** le dispositif de traitement de données (150) est conçu pour adapter une quantité d'application de produits d'épandage agricoles des éléments d'épandage individuels, groupés ou de la totalité de ceux-ci aux types de variétés de plantes accompagnantes de telle sorte que des types de plantes accompagnantes définis et/ou définissables ne sont pas traités.

8. Système d'épandage (100) selon l'une des revendications précédentes, **caractérisé en ce que** le dispositif d'acquisition (60) est en connexion de signal et/ou peut être mis en connexion de signal avec le dispositif de traitement de données (150) et il est formé par au moins une caméra et/ou un capteur (62) disposé au niveau de la rampe d'épandage (24).

9. Système d'épandage (100) selon l'une des revendications précédentes, **caractérisé en ce que** le dispositif d'acquisition (60) est en connexion de signal et/ou peut être mis en connexion de signal avec le dispositif de traitement de données (150) et il est formé par au moins une caméra et/ou un capteur (62) non disposé au niveau de la rampe d'épandage (24), la caméra et/ou le capteur (62) étant de préférence monté et/ou installé sur un engin volant ou encore sur ou dans un terminal mobile.

10. Système d'épandage (100) selon l'une des revendications précédentes, **caractérisé en ce que** le dispositif d'acquisition (60) est formé par au moins une caméra et/ou un capteur (62).

11. Système d'épandage (100) selon l'une des revendications précédentes, **caractérisé en ce qu'**un dispositif d'acquisition (60) est respectivement associé de manière techniquement active aux éléments d'épandage individuels, groupés ou à la totalité de ceux-ci.

12. Système d'épandage (100) selon l'une des revendications précédentes, **caractérisé en ce que** le dispositif de traitement de données (150) est conçu pour adapter une quantité d'application minimale de produits d'épandage agricoles avec des éléments d'épandage individuels, groupés ou de la totalité de ceux-ci indépendamment du stade de développement, et **en ce que** le dispositif de traitement de données (150) est conçu pour adapter une quantité d'application minimale des éléments d'épandage individuels, groupés ou de la totalité de ceux-ci à l'aide des stades de développement et/ou à l'aide des types de végétation accompagnante.

13. Système d'épandage (100) selon l'une des revendications précédentes, **caractérisé en ce que** le peuplement végétal (50) possède des plantes utiles (52) et de la végétation accompagnante (54) et **en ce que** le dispositif d'acquisition (60) est conçu pour définir une position de la végétation accompagnante (54), de préférence pour la définir sur une surface agricole, et **en ce que** le dispositif de traitement de données (150) est conçu pour adapter une quantité d'application de produits d'épandage agricoles des éléments d'épandage individuels, groupés ou de la totalité de ceux-ci à une position.

14. Système d'épandage (100) selon l'une des revendications précédentes, **caractérisé en ce que** le peuplement végétal (50) possède des plantes utiles (52) et de la végétation accompagnante (54) et **en ce que** le dispositif d'acquisition (60) est conçu pour détecter une taille de la végétation accompagnante (54) et **en ce que** le dispositif de traitement de données (150) est conçu pour adapter une quantité d'application de produits d'épandage agricoles des éléments d'épandage individuels, groupés ou de la totalité de ceux-ci à l'aide d'une taille ou à l'aide d'un produit d'épandage agricole.

15. Procédé d'adaptation d'une quantité d'application, en vue de l'épandage de produits d'épandage agricoles liquides et/ou solides sur un peuplement végétal (50), de préférence pour un pulvérisateur agricole ou un épandeur d'engrais, comprenant les étapes suivantes
- fourniture d'une rampe d'épandage (24), comprenant une pluralité d'éléments d'épandage disposés sur celle-ci et reliés et/ou pouvant être reliés à un réservoir (22) pour au moins un produit d'épandage agricole, ainsi que fourniture d'un dispositif d'acquisition (60), lequel est conçu pour détecter des stades de développement du peuplement végétal (50), et fourniture d'un dispositif de traitement de données (150),
- adaptation d'une quantité d'application des produits d'épandage agricoles des éléments d'épandage individuels, groupés ou de la totalité de ceux-ci aux stades de développement au moyen du dispositif de traitement de données (150),
le peuplement végétal (50) possédant des plantes utiles (52) et de la végétation accompagnante (54), **caractérisé en ce que**
le dispositif d'acquisition (60) et/ou le dispositif de traitement de données (150) est conçu pour détecter une proportion de la végétation accompagnante (54) par rapport aux plantes utiles (52) et **en ce que** le dispositif de traitement de données (150) est conçu pour adapter une quantité d'application des produits d'épandage agricoles des éléments d'épandage individuels, groupés ou de la totalité de ceux-ci à la proportion de la végétation accompagnante (54) de telle sorte qu'une quantité minimale de la végétation accompagnante (54) soit conservée.

16. Machine d'épandage (10) agricole, de préférence pulvérisateur agricole ou épandeur d'engrais, comprenant
- un châssis (16) qui porte des composants de la machine d'épandage (10),
- une rampe d'épandage (24) montée sur le châssis (16) réglable en hauteur par rapport au châssis (16), laquelle possède une partie centrale et des parties latérales (28) montées pivotantes à gauche et à droite sur la partie centrale au moyen d'axes de pivotement ainsi qu'une pluralité d'éléments d'épandage disposés sur celle-ci et reliés et/ou pouvant être reliés à un réservoir (22) pour au moins un produit d'épandage agricole,
**caractérisée en ce que** la machine d'épandage (10) comporte un système d'épandage (100) selon l'une des revendications 1 à 14 et/ou **en ce que** la machine d'épandage (10) est conçue pour mettre en œuvre un procédé selon la revendication 15.

17. Machine d'épandage (10) selon la revendication 16, **caractérisée en ce que** celle-ci comporte un dispositif de traitement de données (150), lequel est en connexion de signal et/ou peut être mis en connexion de signal avec un dispositif d'acquisition (60), le dispositif d'acquisition (60) étant conçu pour détecter les stades de développement d'une végétation accompagnante (54) dans un procédé en ligne et/ou les détecter dans un procédé hors ligne.
